## Europäisches Patentamt

## European Patent Office

## Office européen des brevets

(11) Publication number: **0 116 845**
**B1**

(12) **EUROPEAN PATENT SPECIFICATION**

(45) Date of publication of patent specification: **20.12.89**

(51) Int. Cl.⁴: **D 04 H 1/54**

(21) Application number: **84100357.7**

(22) Date of filing: **14.01.84**

(54) Consolidation of polyethylene fibrous networks.

(30) Priority: **18.02.83 US 467997**

(43) Date of publication of application:
**29.08.84 Bulletin 84/35**

(45) Publication of the grant of the patent:
**20.12.89 Bulletin 89/51**

(84) Designated Contracting States:
**DE FR GB IT NL**

(56) References cited:
**EP-A-0 055 001**
**EP-A-0 064 167**
**US-A-3 231 650**
**US-A-3 249 129**

(73) Proprietor: **ALLIED-SIGNAL INC. (a Delaware corporation)**
**Columbia Road and Park Avenue P.O. Box 2245R**
**Morristown New Jersey 07960 (US)**

(72) Inventor: **Harpell, Gary A.**
**c/o Allied Corporation P.O. Box 2245R**
**Morristown New Jersey 07960 (US)**
Inventor: **Kavesh, Sheldon**
**c/o Allied Corporation P.O. Box 2245R**
**Morristown New Jersey 07960 (US)**
Inventor: **Palley, Igor**
**c/o Allied Corporation P.O. Box 2245R**
**Morristown New Jersey 07960 (US)**
Inventor: **Prevorsek, Dusan C.**
**c/o Allied Corporation P.O. Box 2245R**
**Morristown New Jersey 07960 (US)**

(74) Representative: **Brock, Peter William**
**URQUHART-DYKES & LORD 91 Wimpole Street**
**London W1M 8AH (GB)**

Courier Press, Leamington Spa, England.

# EP 0 116 845 B1

**Description**

The present invention relates to a process of fabricating fibrous networks such as fabrics and to articles produced therefrom, and especially to articles produced from high tenacity/high modulus polyethylene fibers.

High performance (that is high tenacity and modulus) polyethylene fibers are known to be produced by two general types of processes. Such fibers are drawn from a supersaturated solution in the processes of US—A—4137394 and —4356138. Such fibers are produced by gel spinning and stretching in the processes of Stamicarbon's GB—A—2042414 and —2051667 and Allied Corporation's EP—A—0064167. It is also known to prepare modified fibers of the above types by gel spinning the ultrahigh molecular weight polyethylene with various inorganic fillers (Stamicarbon's EP—A—0055001) and with polymeric modifiers as in our US Application Serial No. 430577 (now US—A—4455273). Such fibers can be characterized generally by having a weight average molecular weight of at least about 500,000, preferably at least 1,000,000, a tenacity of at least 20 g/denier (2.2 g/tex), preferably at least 30 g/denier (3.3 g/tex), a tensile modulus or tenacity of at least 500 g/denier (55.6 g/tex) preferably at least 1,000 g/denier (111.1 g/tex) and more preferably at least 1,400 g/denier (155.6 g/tex). Furthermore, US Serial No. 429942 of September 30, 1982, describes heat setting or heat shrinking certain of the above fibers in the form either of multi-filament yarns or of fabrics.

Certain of our copending US Patent Applications also describe composites prepared by using certain of such polyethylene fibers as the fiber component in various matrices as described, for example, in our US Serial No. 359974 (now US—A—4501856) (certain thermoplastic matrices), our US Serial No. 359976 (now US—A—4543286 and —4563392) (coated fibers placed in various thermoplastic and thermosetting matrices) and the above-referenced US Serial No. 430577 (now US—A—4455273 and —4584347) (polymer modified fibers placed in thermosetting matrices). While such composites make excellent use of the fiber properties in many applications, for certain applications the properties of a composite are desired with the highest possible fiber content. Furthermore, for certain applications articles substantially free of voids and/or translucent or transparent articles are desired.

It has been discovered that articles of extraordinary properties can be prepared by applying pressure to a network of high performance polyethylene fibers at elevated temperature without substantially impairing the physical properties of the fiber. Accordingly, the present invention includes a process for the production of polyethylene articles which comprises applying pressure to a network of fibers consisting essentially of polyethylene having weight average molecular weight of at least 500,000, said fibers having a tenacity of at least about 20 g/denier (2.2 g/tex), and a tensile modulus of at least about 500 g/denier (55.6 g/tex), at a temperature of 100 to 160°C, and at a pressure and for a time sufficient to cause adjacent fibers to adhere. Preferably, the pressure and time are sufficient to deform the fibers and substantially eliminate the voids, and more preferably the pressure and time are sufficient to form a translucent, and most preferably a transparent article substantially free of voids.

The present invention also includes various articles prepared by the above-described process, including articles prepared by application of the above-described process to fabrics.

The precursor fibers of the present invention may be prepared by any of the various processes of the above-referenced patents and patent applications, as well as by modifications of these processes described by various authors including Pennings, Smith, Lemstra and their co-authors. The properties of these fibers can be differentiated from ordinary a weight average molecular weight of at least 500,000 (preferably at least 1,000,000 and more preferably between 2,000,000 and 6,000,000), a tenacity of at least 20 g/denier (2.2 g/tex), preferably at least 30 g/denier (3.3 g/tex), and a tensile modulus of at least 500 g/denier (55.6 g/tex) preferably at least 1,000 g/denier (111.1 g/tex), more preferably at least 1,400 g/denier (155.6 g/tex), and most preferably at least 1,600 g/denier (177.8 g/tex). These properties, and especially the preferred and more preferred forms of these properties, are best achieved by the process of EP—A—0064167. Other physical properties typical of the fibers prepared by EP—A—0064167 are a main melting temperature (by DSC at 10°C per minute) of at least 147°C, porosity of less than 10% and creep of less than 5% (at 23°C for 50 days at 10% of breaking load).

The fibers should consist essentially of polyethylene. In addition to such fibers prepared with polyethylene as substantially the only polymeric component, fibers with polymeric modifiers as described in U.S. Serial No. 430,577 (the disclosure of which is incorporated herein by reference) may also be used. Such polymeric modifiers include minor proportions of lower molecular weight polyethylene or polypropylene, ethylene-propylene copolymers (including elastomeric copolymers), ethylene copolymers with various comonomers having ethylene crystallinity, and oxidized polyethylene. A preferred class of additives are copolymers of ethylene with polar comonomers such as acrylic acid which may improve adherence between fibers in the articles of the present invention. Such modified fiber could be treated (e.g. with NaOH solution) prior to compression. The mineral filled polyethylene fibers of European Patent Application 55,001 may also be used.

For the practice of the present process, such fibers are formed into a network. The use of networks without matrices eliminates the need for manipulating a separate matrix material. One form of such network is a fabric, including fabrics prepared by various weaves including plain (tabby) weave, basket weave and satin weave; although other, more elaborate weaves such as triaxial weaves may also be used.

2

It is contemplated that either the multifilament yarns used in preparing the fabrics or the fabrics themselves may be heat set or heat shrunk (in the absence of applied pressure) prior to the practice of the present invention. In addition to fabrics, however, the networks used for the practice of the present invention may also include various constrained or unconstrained arrangements of fibers including substantially parallel arrays (including filament windings and pultrusions), layered arrays with each layer having substantially parallel fibers and adjacent layers being non-parallel to each other and randomly oriented chopped or continuous fibers.

In the present process, pressure is applied to the fibrous network at a temperature between about 100°C and about 160°C, with the pressure and time being sufficient to achieve one of four different levels of fabrication. The minimum level of fabrication is that pressure and time sufficient to cause adjacent fibers to adhere. Such a minimum level of treatment may be applied to non-fabric arrays where it is desired to obtain a non-woven fabric as the polyethylene article. A more substantial amount of pressure (and/or time) is applied if it is desired to deform the fibers and substantially eliminate voids. This result is normally obtained when it is desired to form a film-like article which is substantially free of voids, and especially has reduced gas and liquid permeability and has a high degree of in-plane stiffness, bending stiffness and resistance to shear. Once such film-like articles are formed, they may be further processed by stamping, vacuum forming or similar operations.

The temperature of the present process may vary from about 100°C to about 160°C, with about 110°C to about 155°C being preferred. For some applications, the range of about 140°C to about 155°C is more preferred. It is considered particularly surprising that these higher temperatures are effective and do not substantially degrade film properties given that the polyethylene used generally has a melting temperature of approximately 138°C (by DSC at 10°C/min) and the fiber a main melting temperature of 144—158°C, depending upon the mode of preparation. It is also surprising that the fabrication process is effective at the lower temperatures to promote adhesion and other effects described below.

For particular embodiments, time, temperature and pressure are selected in combination, with less time generally being necessary or desirable as either pressure or temperature are increased. Pressure may vary widely, with pressures of 0.5—1 MPa being typical when the present process is practiced in an autoclave or similar apparatus, and pressures of 1—200 MPa being typical when the present process is practiced in a molding press or similar apparatus. In molding embodiments, a vacuum can be used to expedite elimination of voids. Times may vary widely, such as from one-tenth, one or a few seconds to give minutes or even twenty or thirty minutes. Preferred times for molding press embodiments are between about thirty seconds and about ten minutes. Required times will increase with increasing thicknesses.

Four levels of fabrication may be achieved by the present process. The first level is adherence of adjacent fibers in either a loose network or a fabric. The product in this case may be a non-woven fabric. Temperatures for such first level processes are typically 100—150°C, pressures are typically 0.5—5 MPa and times are typically one-tenth second—ten minutes. The second level, which may be applied to any form of fiber network, is that sufficient to deform the fiber and substantially eliminate voids. In some cases this is accomplished to convert air permeable fabrics or other networks to air-impermeable film-like structures, as when sails are being made. In other cases, this is accomplished to achieve an article having at least 80% of the density (by water displacement) of the parent polymer. In still other cases, this is accomplished to provide articles (e.g. ballistic-resistant articles) requiring a substantial force to displace fibers in the article and thereby absorb close to the full energy of fiber breakage before the article is penetrated.

The third and fourth levels of fabrication which may be achieved by the present process go beyond the second level to produce articles that are either translucent or transparent. Such terms have well-understood meanings in the film art, and can be distinguished by the procedures of ASTM D-1003, "Haze and Transmittance of Transparent Plastics". Preferred translucent articles have a transmittance value of at least 10%, preferably at least 40%. It should be noted that these properties are determined on the article produced, regardless of thickness (not on a standard thickness article). In general, more time, higher temperatures and/or more pressure are required to achieve higher levels of fabrication by the present process.

It has been found that the fiber properties, and especially tenacity (and to a lesser extent modulus) are either improved or, at least, are not degraded to a substantial extent, by preferred forms of the present invention. This is particularly surprising when the molding temperature exceeds the melting temperature of the precursor fiber. Preferred process conditions are those wherein the tensile strength (in grams per denier) of the article after fabrication is at least the following percentages of the same property for the starting fiber network:

Level 1: at least 70%, more preferably at least 90%
Level 2: at least 65%, more preferably at least 80%
Level 3: at least 60%, more preferably at least 75%
Level 4: at least 55%, more preferably at least 75%

Example 1

The following experiments illustrate the retention of tensile properties by fibers prepared in accordance with Allied Corporation EPA 64,167 of Kavesh et al. The fiber used was a 32-filament, 147-denier yarn prepared generally in accordance with Example 536 of EPA 64,167, employing stretch ratios on gel fiber of 2:1 at room temperature, 5.75:1 at 120°C and 2:1 at 150°C. The stretched gel fiber was extracted with trichlorotrifluoroethane and dried. The product 32-filament yarn had 31 g/den tenacity, 1700 g/denier modulus and an elongation to break of 2.8%.

Lengths of the yarn were placed in an air circulating oven at various temperatures from 120°C to 155°C for 8.5 minutes, with some yarn samples held at constant dimension, others being free to contract. Ten individual randomly selected filaments were then taken from each yarn sample and tested on an Instron Tensile Testing Machine using a 2 inch (5.08 cm) gage length and a 2 inch/minute (5.08 cm/min) head-speed. The average tenacity values for ten monofilament at each of twelve conditions (one untreated yarn, five yarns heated at constant length and six yarns heated inconstrained) are shown in Table 1.

TABLE 1

| Temperature | Average filament tenacity at constant length | Yarn shrinkage | Average filament tenacity of shrunk fiber |
|---|---|---|---|
| Control | 44 | — | — |
| 120°C | 45 | 1.4% | 43 |
| 130°C | 39 | 1.9% | 32 |
| 139°C | — | 3.8% | 43 |
| 145°C | 36 | 7.7% | 36 |
| 150°C | 40 | 35.0% | 21 |
| 155°C | 41 | 37.0% | 11 |

The results show essentially complete retention of physical properties over the entire 120—155°C range for constrained fibers, and over the lower portion thereof (120—145°C) for unconstrained fibers.

Examples 2—4

A sample of the same fiber used in Example 1 was analyzed by wide-angle x-ray crystallography and determined to have a crystallinity index of 73% by the method by P. H. Hermans and A. Weidinger, Makromol. Chem., Vol. 44, pp. 24—36 (1961). Three pairs of plaques were then prepared by winding the fiber around a 3-inch square (7.6 cm by 7.6 cm) Apollo aluminum plate and molding for 5 minutes at a pressure of 46 MPa. The films produced were essentially transparent, with small opaque areas. The fiber weight (in grams), mold temperature and crystalline index (in percent) are shown in Table 2.

TABLE 2

| Example | Fiber weight | Mold temp | Crystalline index |
|---|---|---|---|
| 2 | 1.30 | 140°C | 78% |
| 3 | 1.32 | 147°C | 81% |
| 4 | 1.21 | 150°C | 82% |

The results show increased degree of crystallinity for the matrix-free molded plaques compared to the precursor fiber.

4

Example 5

Samples were cut from Fabric 6 of USSN 429942. Properties of the fibers used to prepare this fabric are summarized below, with tenacity and modulus given in grams per denier (grams per tex):

| | | Yarns employed | | | | Ave areal density as made |
|---|---|---|---|---|---|---|
| | | Filaments | Denier (tex) | Ten | Mod | |
| Warp | | 100 | 1086 (9774) | 31.6 (3.5) | 1116 (124.0) | 0.23 kg/m² |
| Warp | | 100 | 1197 (10773) | 29.7 (3.3) | 1030 (114.4) | |
| Fill | | 100 | 1057 (9513) | 31.5 (3.5) | 1075 (119.4) | |

The yarns of fibers 6 were twisted 0.28 turns/inch (0.11 turns/cm) and contained about 24 ends/inch (9.4 ends/cm) in both warp and fill directions.

Two-ply samples of fabric 6 were molded at a pressure of 24.1 MPa and temperature of 140°C for 5 minutes in a mold, keeping the ends taut in a frame. These samples (areal densities 0.478 and 0.472 kg/m²) were tested for ballistics resistance in the manner described in USSN 359975 (now US—A—4303012), with initial 22 caliber fragment velocities of 1145 and 1118 feet/second (349 and 341 m/sec), and showed energy absorption values of 62.9 and 54.7 Jm²/kg, respectively. These results are better than energy absorption values of 47.5 and 48.1 Jm²/kg for untreated pieces of Fabric 6 and at least as good as the 40—62 Jm²/kg energy absorption value for heat-set pieces of fabric 6 (at 130, 145 and 155°C in a frame). The corresponding values for a Kevlar (Registered Trademark) 29 fabric are 33—41 Jm²/kg.

Similar molded fabrics appeared generally equivalent to Kevlar® 29 fabrics in the areal density required to stop penetration by 0.13 gram fragments with initial velocities about 2200 ft/sec (671 m/sec).

Example 6

Six plaques were then prepared from fibers only (using a 100 filament, 1384 denier twisted yarn of 27.3 g/den tenacity and 963 g/den modulus) by winding successive layers at right angles around a 3 inch by 3 inch (6.7 cm×6.7 cm) aluminum plate. Molding three wound plates at 5, 15 and 30 tons (4.3, 12.9 and 25.8 MPa) pressure produced six plaques, each having an areal density of about 1 kg/m². Firing 22 caliber fragments at these plaques produced the results shown in Table 3.

TABLE 3

| Pressure (MPa) | Areal density (kg/m²) | Velocity in (m/sec) | Energy absorption Jm²/kg |
|---|---|---|---|
| 4.3 | 1.133 | 346 | 30.8 |
| 4.3 | 1.133 | 344 | 31.8 |
| 12.9 | 1.093 | 349 | 38.5 |
| 12.9 | 1.093 | 348 | 39.7 |
| 25.8 | 1.005 | 350 | 36.4 |
| 25.8 | 1.005 | 356 | 32.1 |

This procedure was repeated using various 16 and 64 filament (116—181 and 361—429 denier, respectively) yarns of 29—31 g/den tenacity, 1511—1590 g/den modulus and also using, in some cases, various amounts of HDPE film as a matrix. Energy absorption (based on fiber content) was 33—43 Jm²/kg in all instances and appeared generally independent of fiber/matrix ratio. This suggests that molded articles with fiber only could have the highest energy absorption on a total weight basis.

Example 7

One inch square (2.54 cm×2.54 cm) samples were cut from Fabric 4 of U.S.S.N. 429,952. This fabric was prepared by combining multifilament yarns of 30—32 g/denier (prepared generally in accordance with EPA 64,167) to give yarns of approximately 900 denier (with 112 and 128 filaments for the two combined yarns), twisted 0.16 turns/cm and woven to give an areal density of approximately 0.22 kg/m², 9.5 warp ends/cm and 9.5 fill ends/cm. The small squares were molded at 2, 10 or 20 tons (27, 136 or 272 MPa) for 1, 2

5

or 10 minutes at 110°C, 139°C or 144°C as indicated in Table 4. The observed properties are shown in Table 4.

TABLE 4

| Square | Temp | Pressure (MPa) | Time (min) | Properties of molded squa |
|--------|------|----------------|------------|---------------------------|
| A | 144°C | 136 | 10 | Clear, noticeable pattern |
| B | 139°C | 272 | 10 | Clear, noticeable pattern |
| C | 110°C | 272 | 10 | Translucent |
| D | 110°C | 272 | 2 | More opaque than C |
| E | 110°C | 27 | 1 | Most opaque |

All five plaques were apparently film-like in the sense of freedom from gaps. Plaques A and B were most clear (essentially transparent), with a visible square pattern attributable to the weave of the precursor fabric.

Example 8

Samples 21 cm in length and 1.3—1.4 cm in width were cut from Fabric 2 of U.S.S.N. 429,942. The fibers used (called D, F and G) were 96,128 and 96 filament yarns of 27, 32 and 33 g/den tenacity and approximately 1100, 1400 and 1400 g/denier modulus. Molding was conducted at 120°C, 140°C, 145°C and 150°C for 2 minutes at 20 tons force (68 MPa pressure). The tenacity of molded fabric strips and a strip not molded are shown in Table 5.

TABLE 5

| Sample | Molding temp | Breaking load kg (N) | Denier (tex) | Tenacity g/den (g/tex) |
|--------|--------------|----------------------|--------------|------------------------|
| A | 120°C | 218 (2139) | 30,000 (270,000) | 7.26 (0.8) |
| B | 150°C | 163 (1599) | 30,000 (270,000) | 5.45 (0.6) |
| C | 145°C | 200 (1962) | 29,960 (269,640) | 6.67 (0.7) |
| D | 140°C | 182 (1785) | 29,790 (268,110) | 7.32 (0.8) |
| Fabric control | — | 213 (2090) | 33,650 (302,850) | 6.34 (0.7) |

It appears that tensile strengths above that of the fabric are achieved by molding at 120°C, 140°C and, possibly, 145°C. The material molded at 150°C showed a 14% loss of tensile strength.

## Claims

1. A process for the production of polyethylene articles which comprises applying pressure to a network of fibers consisting essentially of polyethylene having a weight average molecular weight of at least 500,000, said fibers having a tenacity of at least 20 g/denier (2.2 g/tex) and tensile modulus of at least 500 g/denier (55.6 g/tex), at a temperature of 100 to 160°C, and at a pressure and for a time sufficient to cause adjacent fibers to adhere.

2. A process according to claim 1 characterized in that the pressure and time are sufficient to deform the fibers and substantially eliminate voids.

3. A process according to claim 2 characterized in that the pressure and time are sufficient to form a translucent article substantially free of voids.

4. A process according to any previous claim characterized in that the polyethylene has a weight average molecular weight of at least 1,000,000, and the fibers have a tenacity of at least 30 g/denier (3.3 g/tex) and a tensile modulus of at least 1000 g/denier (111.1 g/tex).

5. A process according to any previous claim characterized in that the temperature is 110°C to 155°C.

6. A process according to any previous claim characterized in that the temperature is 140°C to 155°C.

7. A process according to any previous claim characterized in that the network is a woven fabric.

8. A process according to any previous claim characterized in that the pressure and time are sufficient to form a flexible film.

**Patentansprüche**

1. Verfahren zum Herstellen eines Polyethylenerzeugnisses, das das Anwenden von Druck auf ein Netzwerk von im wesentlichen aus Polyethylen mit einem Gewichtsmittel des Molekulargewichts von wenigstens 500000 bestehenden Fasern umfaßt, wobei die Fasern eine Festigkeit von wenigstens 20 g/denier (2.2 g/tex) und einen Zugmodul von wenigstens 500 g/denier (55.6 g/tex) bei einer Temperatur von 100 bis 160°C und bei einem Druck und für eine Zeit aufweisen, die ausreicht, um benachbarte Fasern zu verkleben.

2. Verfahren nach Anspruch 1, dadurch gekennzeichnet, daß der Druck und die Zeit ausreichend sind, um die Fasern zu verformen und im wesentlichen Leerstellen zu eliminieren.

3. Verfahren nach Anspruch 2, dadurch gekennzeichnet, daß der Druck und die Zeit ausreichend sind, um ein im wesentlichen von Leerstellen freies, durchsichtiges Erzeugnis zu bilden.

4. Verfahren nach einem der vorhergehenden Ansprüche, dadurch gekennzeichnet, daß das Polyethylen ein Gewichtsmittel des Molekulargewichts von wenigstens 1000000 aufweist, und die Fasern eine Zugfestigkeit von wenigstens 30 g/denier (3.3 g/tex) und einen Zugmodul von wenigstens 1000 g/denier (111.1 g/tex) haben.

5. Verfahren nach einem der vorhergehenden Ansprüche, dadurch gekennzeichnet, daß die Temperatur 110°C bis 155°C beträgt.

6. Verfahren nach einem der vorhergehenden Ansprüche, dadurch gekennzeichnet, daß die Temperatur 140°C bis 155°C beträgt.

7. Verfahren nach einem der vorhergehenden Ansprüche, dadurch gekennzeichnet, daß das Netzwerk ein gewebtes Gewebe ist.

8. Verfahren nach einem der vorhergehenden Ansprüche, dadurch gekennzeichnet, daß der Druck und die Zeit ausreichend sind, um einen flexiblen Film zu bilden.

**Revendications**

1. Procédé pour la production d'objets en polyéthylène qui comprend l'application de pression à un réseau de fibres constituées essentiellement par du polyéthylène présentant une masse molaire moyenne en poids d'au moins 500 000, ces fibres présentant une ténacité d'au moins 20 g/denier (2,2 g/tex) et un module d'élasticité en traction d'au moins 500 g/denier (55,6 g/tex), à une température de 100 à 160°C, et à une pression et pendant un temps suffisants pour provoquer l'adhérence de fibres adjacentes.

2. Procédé selon la revendication 1, caractérisé en ce que la pression et le temps sont suffisants pour déformer les fibres et supprimer pratiquement les vides.

3. Procédé selon la revendication 2, caractérisé en ce que la pression et le temps sont suffisants pour former un objet translucide pratiquement dépourvu de vides.

4. Procédé selon l'une quelconque des revendications précédentes, caractérisé en ce que le polyéthylène présente une masse molaire moyenne en poids d'au moins 1 000 000 et les fibres présentent une ténacité d'au moins 30 g/denier (3,3 g/tex) et un module d'élasticité en traction d'au moins 1000 g/denier (111,1 g/tex).

5. Procédé selon l'une quelconque des revendications précédentes, caractérisé en ce que la température est comprise entre 110°C et 155°C.

6. Procédé selon l'une quelconque des revendications précédentes, caractérisé en ce que la température est comprise entre 140°C et 155°C.

7. Procédé selon l'une quelconque des revendications précédentes, caractérisé en ce que le réseau est un textile tissé.

8. Procédé selon l'une quelconque des revendications précédentes, caractérisé en ce que la pression et le temps sont suffisants pour former un film souple.